# EUROPEAN PATENT SPECIFICATION

(11) **EP 2 917 133 B1**
(45) Date of publication and mention of the grant of the patent: **31.01.2018**
(21) Application number: 13789382.2
(22) Date of filing: 06.11.2013
(51) Int. Cl.: B65D 83/00, A47F 1/12, B65D 5/52, B65D 5/72

(54) **PUSHER AND SHELF READY PACK**
SCHIEBER UND REGALFERTIGE VERPACKUNG
POUSSOIR ET EMBALLAGE PRET À LA VENTE

(30) Priority: 06.11.2012 GB 201219969
(43) Date of publication of application: 16.09.2015
(73) Proprietor: Mondelez UK R&D Limited, Birmingham, West Midlands B30 2LU (GB)
(72) Inventor: KREUTZER, Erich, 79539 Lörrach (DE); KOWALEWSKI, Alain, 79539 Lörrach (DE); HOFMEISTER, Stefanie, 79539 Lörrach (DE); BORTOS, Daniel, 79539 Lörrach (DE); EGER, Frank, A-1040 Wien (AT); BRADBURY, Simon Timothy Nicholas, Manchester M2 5NT (GB)
(74) Representative: Boult Wade Tennant
(86) International application number: PCT/GB2013/052900
(87) International publication number: WO 2014/072701

(56) References cited:
- EP-A1- 1 462 034
- DE-A1- 1 554 649
- DE-A1-102007 042 764
- DE-B3-102004 015 701
- DE-U1- 20 316 963
- US-B1- 7 481 313

## Description

The present invention relates to a pusher for use in packaging for displaying items for sale.

### Background

It is known to transport pre-packaged items, such as confectionary, from a manufacturing site to a vending site in bulk cartons, such as cardboard boxes. One of the main functions of such a carton is to protect the items from physical damage during transit. At the vending site, the items are typically removed from the carton and arranged on display for sale.

It may, however, be desirable to display multiple smaller items in a carton and dispense them directly therefrom. In such a case it can be advantageous to use the same carton that was used for transporting the items. Such cartons are often referred to as 'shelf ready packs'. US-A-7284662 describes a carton that allows a product to be shipped, displayed, and dispensed all from the same carton.

Existing shelf ready packs exhibit a number of problems. For example, items which are stacked in such packs (whether horizontally, vertically or at an inclined angle) can look unsightly after removal of several items.
Furthermore, removal of items can result in poor on-shelf presence of the product with the products often hidden from view. It is therefore desirable to have a shelf ready pack which maintains on-shelf presence of the product and allows for the item to be dispensed to the consumer in a controlled manner. It is also be desirable that such a shelf ready pack is formed and filled using existing manufacturing and filling equipment.

DE-U-29908078 discloses such a shelf ready pack which aims to solve this problem. The pack comprises a vertical abutment surface having a horizontal pull-tab at its lower edge. The horizontal pull-tab is guided through an opening in the front wall of the pack to move the vertical abutment surface forward within the pack, and hence also any goods in front of it. However, such a pack requires regular attention by pulling the tab forward within the pack.

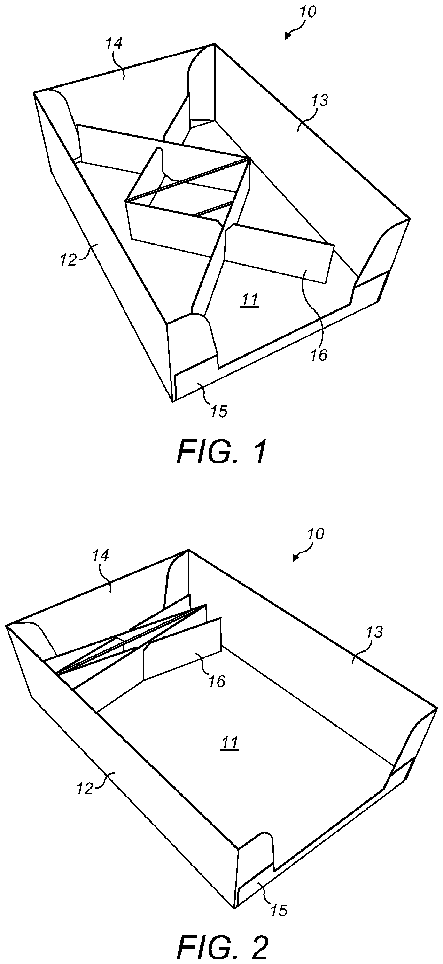

EP-A-1462034 discloses a shelf ready pack having a resilient compressible slider in the dispensing direction, which is inserted behind the goods as they are packaged. This slider is pushed by a pusher in accordance with the preamble of appended claim 1. As goods are removed from the front of the pack, the resilient slider extends towards the front of the pack, thereby pushing the remaining goods contained therein to the front of the pack (see Figures 1 and 2).
DE-A-20316963 discloses a shelf ready pack which has a traction device, such as a rubber band, attached between a slide and the carton. This traction device pulls the slider towards the front of the pack, thereby pulling the remaining goods in the carton towards the front of the pack. DE-A-102007042764 discloses a similar arrangement with an elastic traction element connecting a slide to the carton. The traction element pulls the slide forward to pull the goods contained in the container towards the front of the pack.

DE 10 2004 015 701 B3 discloses a shelf ready pack in accordance with the preamble of appended claim 16 and US 7 481 313 B1 discloses such a pack in accordance with the preamble of claim 17.

### Brief Summary of the Invention

In a first aspect, the present invention relates to a pusher for use in packaging for displaying items, comprising: an extendable member having a plurality of sections which are pivotally connected to each other at at least one pivot point and are configured to provide at least a pair of spaced apart portions; and at least one resilient member positioned about the spaced apart portions to bias them towards each other in a first direction; wherein the biasing of the spaced apart portions towards each other results in an extension of the extendable member in a second direction which is perpendicular to the first direction; characterised in that the extendable member is formed from a single elongate element.

In a second aspect, which does not fall within the scope of the claims, the present invention relates to a pusher for use in packaging for displaying items, comprising a resilient ring which is twisted to form a figure of eight.

In a third aspect, the present invention relates to a shelf ready pack for displaying items for sale, comprising: a carton having a base, a rear wall, a front wall, and two side walls; and a pusher according to any one of claims 1 to 11; wherein the pusher is arranged so that it abuts the back wall of the carton and extends towards the front wall of the carton.

In a fourth aspect, the present invention relates to a shelf ready pack for displaying items for sale, comprising: a carton having a base, a rear wall, a front wall, and two side walls; a rigid member arranged to sit in the carton; and a resilient member; wherein a channel is provided in the base of the carton for housing the resilient member; characterised in that the rigid member is connected to the front wall by the resilient member such that the resilient member is biased to urge the rigid member towards the front wall of the carton.

In a fifth aspect, the present invention relates to a shelf ready pack for displaying items for sale, comprising: a carton having a base, a rear wall, a front wall, and two side walls; a rigid member arranged to sit in the carton; and a resilient member; wherein the rigid member and the resilient member are arranged such that the resilient member is biased to urge the rigid member towards the front wall of the carton; characterised in that the front wall is shorter than the side walls and rear wall; the resilient member comprises a ring which is located around the side walls and rear wall; and the rigid member is placed between the resilient member and the front wall.

In a sixth aspect, which does not fall within the scope of the claims, the present invention relates to a shelf ready pack for displaying items for sale, comprising: a carton having a base, a rear wall, a front wall, two side walls, and a lid; and a resilient member secured between the front wall and the lid; wherein the resilient member is arranged such that the resilient member is biased to urge any items placed in front of it towards the front wall of the carton.

### Brief Description of the Figures

Preferred embodiments of the invention will now be described, by way of example only, with reference to the accompanying drawings in which:
Figure 1 is a perspective view of a prior art pusher in a shelf ready pack, with the pusher in its extended state;
Figure 2 is a perspective view of the prior art pusher of Figure 1 in its compressed state;
Figure 3 is a side elevation of an element for a first embodiment of a pusher according to the present invention;
Figure 4A is a plan view of a pusher assembled from the element of Figure 3;
Figure 4B is a plan view of a variation of the first embodiment of a pusher according to the present invention;
Figure 5 is a side elevation of an element for a second embodiment of a pusher according to the present invention;
Figure 6 is a perspective view of a pusher assembled from the element of Figure 5;
Figure 7 is a side elevation of a pair of elements for a pusher not encompassed by the present invention;
Figure 8 is a perspective view of a pusher assembled from the elements of Figure 7;
Figure 9 is a side elevation of a pair of elements for a pusher not encompassed by the present invention;
Figure 10 is a perspective view of a pusher assembled from the elements of Figure 9;
Figure 11 is a side elevation of a pair of elements for a pusher not encompassed by the present invention;
Figure 12 is a perspective view of a pusher assembled from the elements of Figure 11;
Figure 13 is a side elevation of a pair of elements for a pusher not encompassed by the present invention;
Figure 14 is a perspective view of a pusher assembled from the elements of Figure 13;
Figure 15 is a side elevation of a pair of elements for a pusher not encompassed by the present invention;
Figure 16 is a perspective view of a pusher assembled from the elements of Figure 15;
Figure 17 is a perspective view of an embodiment of a pusher according to the present invention;
Figure 18 is a plan view of a pusher not encompassed by the present invention;
Figure 19 is a front perspective view of a shelf ready pack according to the present invention positioned in a carton;
Figure 20 is a side perspective view of the pusher and carton of Figure 19;
Figure 21 is a front perspective view of another embodiment of a shelf ready pack according to the present invention positioned in a carton;
Figure 22 is a side perspective view of the pusher and carton of Figure 21;
Figure 23 is a front perspective view of a shelf ready pack not encompassed by the present invention positioned in a carton;
Figure 24 is a side perspective view of the pusher and carton of Figure 23;
Figure 25 is a front perspective view of a shelf ready pack not encompassed by to the present invention positioned in a carton; and
Figure 26 is a side perspective view of the pusher and carton of Figure 25.

### Detailed Description

The pusher of the present invention will be described below for use with a container in the form of a cardboard carton which is a shelf ready pack. However, it can be used in a wide variety of other applications in different forms of containers.

In the following, the relative expressions top and bottom, upper and lower, front and rear, inner and outer, upward and downward, and derivatives thereof are used to refer to the completed carton and parts thereof when the carton is in its intended orientation, as shown in Figures 1 and 2, for placing on a shelf or other display surface. However, the carton may be used and stored in other orientations as desired.

Figures 1 and 2 illustrate a prior art carton 10 containing a prior art pusher 16. The carton comprises a base 11, with two side walls 12,13, a rear wall 14, and an at least partial front wall 15, all extending upwardly from the base 11. The carton may be made of any suitable material, a common material for such cartons being cardboard. The carton 10 of Figure 1 is an example of a suitable shelf ready pack for the pusher of the present invention.

Now will be described various embodiments of a pusher according to the present invention, which comprises an extendable member and a resilient member. The action of the resilient member causes the extendable member to contract in one direction and extend in a perpendicular direction, which provides a pushing effect when the pusher is located in a carton 10. The extendable member may be constructed from one or more elements. Any suitable stiff material may be used for the elements. An example of such a suitable material is cardboard. In some embodiments of the invention the elements are provided with certain fold lines to enable the elements to be folded into the required configuration. Such fold lines may be formed in any suitable manner, e.g. by simply creasing the element material. The creasing could be done mechanically or by hand. In another example the fold lines may be formed by partially cutting through the element material, for example by laser scoring, and then folding along the scored lines.

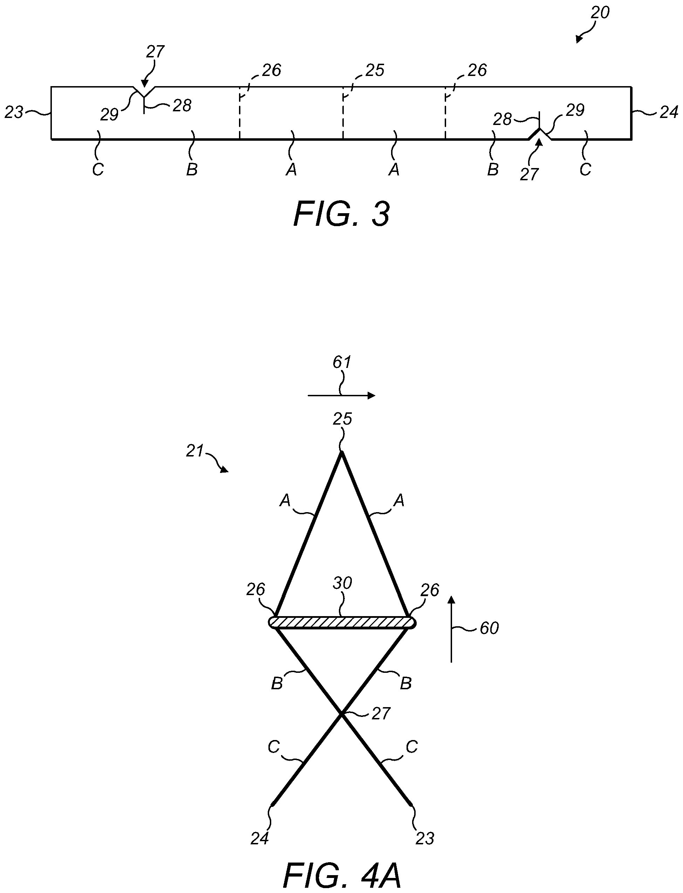

Figure 3 illustrates a single element 20 used to construct the extendable member 22 for a first embodiment of a pusher 21, the assembled pusher 21 being shown in Figure 4A. The element 20 is in the form of an elongate, generally rectangular, strip having first and second ends 23,24. A generally transverse fold line 25 is positioned substantially at the midpoint along the length of the element 20. Further transverse fold lines 26 are positioned respectively at about a third of the distance between the central fold line 25 and each of the first and second ends 23,24. Pivot formation points 27 are positioned respectively at about two thirds of the distance between the central fold line 25 and each of the first and second ends 23,24. The pivot formation points 27 for this, and for other embodiments, preferably comprise a slit 28 extending across at least half of the width of the element 20. In order to form a pivot, the pair of pivot formation points 27 must be slit in opposing directions. A notch 29 may be formed where each slit 28 meets the edge of the element 20 (in this and other embodiments) to facilitate interlocking the slits 28. Alternatively, the slits 28 may be formed in another manner, for example a more open slit in the form of a slot having a width and a base (not shown).

The element 20 is thus divided into a plurality of sections: two sections A extending between the central fold line 25 and each further fold line 26; two sections B extending between each further fold line 26 and each pivot formation point 27; and two sections C extending between each pivot formation point 27 and each end 23,24.

To assemble the pusher 21, the ends 23,24 of the element 20 are folded inwardly towards each other at the fold lines 25,26 and attached at the pivot formation points 27 by interlocking the slits 28. This forms an extendable member 22 in which the sections A diverge from the central fold line 25 and sections B converge back towards each other from the further fold lines 26 and are pivotally connected at pivot formation points 27. Sections A and B therefore define a quadrilateral section which has two opposing pairs of spaced apart vertices. Sections C diverge from the pivot formation points 27 to form a pair of pushing members. A resilient member 30, which is formed from a resilient material, is arranged to encircle the extendable member 22 at the vertices defined by the further fold lines 26. A pair of corresponding notches (not shown) may be provided on opposing edges of the element 20 at the further fold lines 26, in order to aid the location of the resilient member 30. A non-limiting example of a suitable resilient member 30, for this and other embodiments, is an elastic band. The arrangement of the resilient member 30 is such that it urges the spaced apart vertices defined by the further fold lines 26 towards each other, causing the quadrilateral section to contract in that direction, and to elongate in a perpendicular direction. This causes a scissor movement about the pivot point so that the first and second ends 23,24 are also urged towards each other.

In use, the assembled pusher 21 is inserted into a carton 10 adjacent the rear wall 14 behind the goods (not shown). The pusher 21 is arranged in the carton 10 such that the vertex defined by the central fold line 25 abuts the rear wall 14 and the first and second ends 23,24 which form the pushing members abut the goods. The pusher 21 is initially compressed by the goods in a first direction 60 against the bias of the resilient member 30, causing the quadrilateral section to flatten in that direction 60. As goods are removed from the carton 10, the force exerted on the pusher 21 by the goods reduces, and thus the resilient member 30 is able to compress the quadrilateral section in a second direction 61 perpendicular to the first direction 60. This has the effect of causing the pusher 21 to extend in the first direction 60 and thereby push the goods forward within the carton 10.

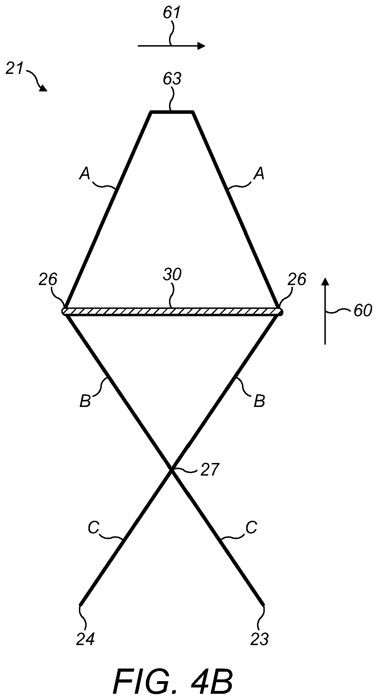

The specific pattern and positioning of fold lines 25,26 of the first embodiment of the pusher 21 may be varied, for example as shown in Figure 4B. In this variation, rather than sections A extending from the vertex defined by the central fold line 25, sections A extend from a flattened section 63. The flattened section 63 may provide more stability to the pusher 21 as it pushes against the rear wall 14 of the carton 10.

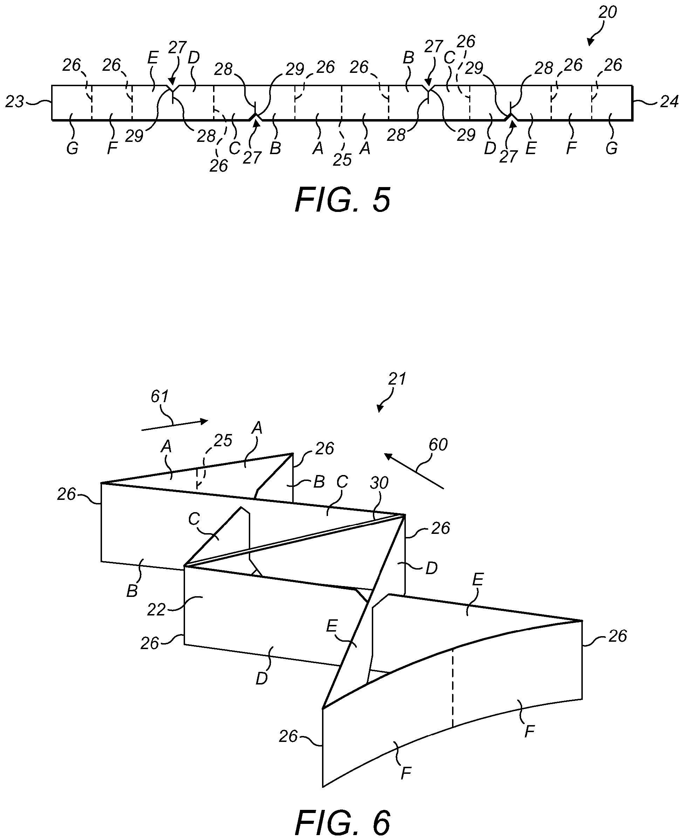

Figure 5 illustrates another single element 20 used to construct the extendable member 22 for a second embodiment of a pusher 21, the assembled pusher 21 being shown in Figure 6. The element 20 is again in the form of an elongate, generally rectangular, strip having first and second ends 23,24. A generally transverse fold line 25 is positioned substantially at the midpoint of its longest side. Further transverse fold lines 26 are positioned respectively at about 1/7, 3/7, 5/7, and 6/7 of the distance between the central fold line 25 and each of the first and second ends 23,24. Pivot formation points 27 are positioned respectively at about 2/7 and 4/7 of the distance between the central fold line 25 and each of the first and second ends 23,24. In order to form a pivot, each corresponding pair of pivot formation points 27 must be slit in opposing directions. Preferably, the pivot formation points 27 at about 2/7 and 4/7 of the distance between the central fold line 25 and each of the first and second ends 23,24 are additionally slit in opposing directions from each other, in order to form a more secure pusher 21 when assembled.

The element 20 is thus divided into a plurality of sections: sections A between the central fold line 25 and each 1/7 further fold line 26; sections B between each 1/7 further fold line 26 and each 2/7 pivot formation point 27; sections C between each 2/7 pivot formation point 27 and each 3/7 further fold line 26; sections D between each 3/7 further fold line 26 and each 4/7 pivot; sections E between each 4/7 pivot and each 5/7 further fold line; sections F between each 5/7 further fold line and each 6/7 further fold line; and sections G between each 6/7 further fold line and each end 23,24.

To assemble the extendable member 22 , the ends 23,24 of the element 20 are folded outwardly towards each other at the central fold line 25 and the 6/7 fold lines 26, and folded inwardly towards each other at the 1/7, 3/7, and 5/7 fold lines 26. The corresponding 2/7 and 4/7 pivot formation points 27 are interlocked. This forms the extendable member 22, in which: the sections A diverge from the central fold line 25; sections B converge back towards each other and are pivotally connected at the 2/7 pivot formation points 27; sections C diverge from the 2/7 pivot formation point 27; sections D converge back towards each other and are pivotally connected at the 4/7 pivot formation points 27; sections E diverge from the 4/7 pivot formation point 27; sections F converge back towards each other and meet at the 6/7 further fold line 26; and sections G overlap with sections F to secure the ends 23,24. The skilled person would appreciate that overlapping sections G could be of a different size from that described, and would be able to alter the pusher 21 accordingly. Sections A and B therefore define a first quadrilateral; sections C and D define a second quadrilateral; and sections E and F define a third quadrilateral section which acts as a pushing member. A resilient member 30 is arranged so that it connects the opposing vertices of the second quadrilateral defined by the 3/7 fold lines 26. A pair of corresponding notches 45 (not shown) may be provided on opposing edges of the element 20 at the 3/7 fold lines 26, in order to aid the location of the resilient member 30. The arrangement of the resilient member 30 is such that it urges the spaced apart vertices defined by the further fold lines 26 towards each other.

In use, the assembled pusher 21 is inserted into a carton 10 adjacent the rear wall 14 behind the goods (not shown). The pusher 21 is arranged in the carton 10 such that the first quadrilateral abuts the rear wall 14 and the third quadrilateral, which forms the pushing member, abuts the goods. The pusher 21 is thus compressed by the goods in a first direction 60 against the bias of the resilient member 30, causing the quadrilateral sections to flatten in that direction 60. As goods are removed from the carton 10, the force exerted on the pusher 21 by the goods reduces, and thus the resilient member 30 is able to compress the second quadrilateral in a second direction 61, which is perpendicular to the first direction 60. This has the effect of causing the pusher 21 to extend in the first direction 60 and thereby push the goods forward within the carton 10.

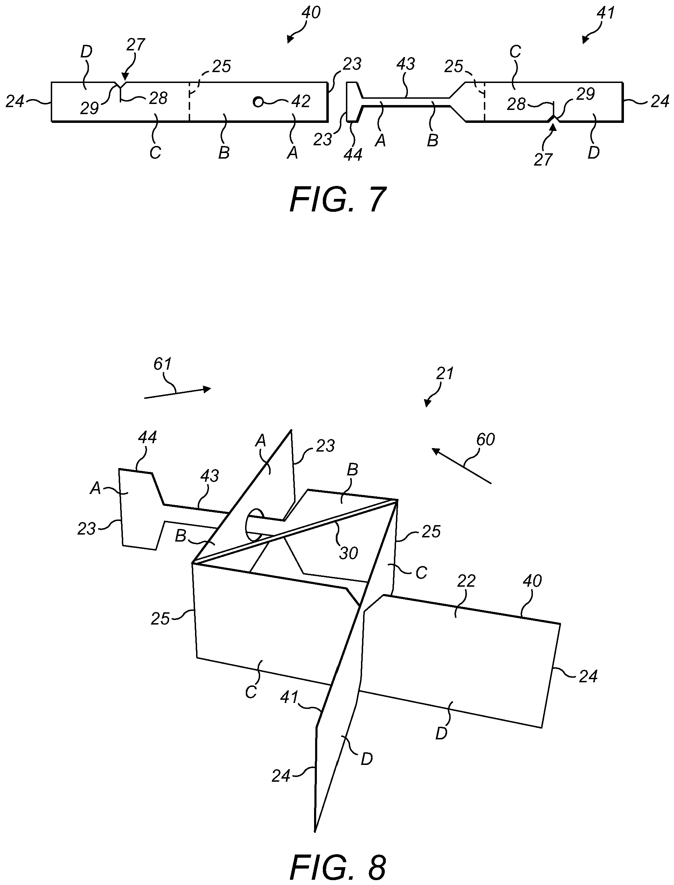

Figure 7 illustrates a first element 40 and a second element 41 used to construct the extendable member 22 for a third embodiment of a pusher 21, the assembled pusher 21 being shown in Figure 8. The first element 40 is in the form of an elongate, generally rectangular, strip having first and second ends 23,24. A generally transverse fold line 25 is positioned substantially at the midpoint along the length of the element 40. An aperture 42 is positioned substantially midway between the central fold line 25 and the first end 23. The aperture 42 is positioned substantially centrally with respect to the width of the member 22. A pivot formation point 27 is positioned substantially midway between the central fold line 25 and the second end 24.

The first element 40 is thus divided into a plurality sections: section A extending between the first end 23 and the aperture 42; section B extending between the aperture 42 and the central fold line 25; section C extending between the central fold line 25 and the pivot formation point 27; and section D extending between the pivot formation point 27 and the second end 24.

The second element 41 is in the form of an elongate, generally rectangular, strip having first and second ends 23,24. A generally transverse fold line 25 is positioned substantially at the midpoint along the length of the element 41. A reduced width portion 43 is provided between the central fold line 25 and the first end 23, with a full width portion 44 immediately adjacent the first end 23. The reduced width portion is dimensioned to fit through the aperture 42 in the first element 40. A pivot formation point 27 is positioned substantially midway between the central fold line 25 and the second end 24. In order to form a pivot, the pivot formation points 27 on the first and second elements 40,41 must be slit in opposing directions.

The second element 41 is thus divided into a plurality sections: section A extending between the first end 23 and the midpoint between the first end 23 and the central fold line 25; section B extending between the midpoint between the first end 23 and the central fold line 25 and the central fold line 25; section C extending between the central fold line 25 and the pivot formation point 27; and section D extending between the pivot formation point 27 and the second end 24.

To assemble the pusher 21, the ends 23,24 of the first and second elements 40,41 are folded inwardly towards each other at their central fold lines 25. The full width portion 44 of the second element 41 is passed through the aperture 42 of the first element 40 such that the reduced width portion 43 sits within the aperture 42, forming a pivotal connection. The pivot formation points 27 on the first and second elements 40,41 are interlocked in a similar manner as described above. This forms the extendable member 22, in which: sections A converge from the first and second ends 23,24 to the pivot between the aperture 42 and the reduced width portion 43; sections B diverge outwards from this point to each central fold line 25; and sections C converge from the central fold lines 25 and are pivotally connected at the pivot formation points 27. Sections B and C therefore define a quadrilateral section. Sections D diverge from the pivot formation points 27 to form a pair of pushing members. A resilient member 30 is arranged around the extendable member 22 about the spaced apart vertices defined by the central fold lines 25 of the first and second elements 40,41. A pair of corresponding notches 45 (not shown) may be provided on opposing edges of one or both of the elements 40,41 at the central fold lines 25, in order to aid the location of the resilient member 30. The arrangement of the resilient member 30 is such that it urges the vertices defined by the central fold lines 25 of the first and second elements 40,41 towards each other, causing the quadrilateral section to contract in one direction and to elongate in the perpendicular direction. This causes a scissor movement about the pivot point 27 so that the first ends 23 and the second ends 24 are also urged respectively towards each other.

In use, the assembled pusher 21 is inserted into a carton 10 adjacent the rear wall 14 behind the goods (not shown). The pusher 21 is arranged in the carton 10 such that the first ends 23 of the first and second elements 40,41 abut the rear wall 14 and the second ends 24 of the first and second elements 40,41, which form a pushing member, abut the goods. The pusher 21 is compressed by the goods in a first direction 60 against the force of the resilient member 30, causing the quadrilateral section to flatten in that direction 60. As goods are removed from the carton 10, the force exerted on the pusher 21 by the goods reduces, and thus the resilient member 30 is able to compress the quadrilateral section in a second direction 61 perpendicular to the first direction 60. This has the effect of causing the pusher 21 to extend in the first direction 60 and thereby push the goods forward within the carton 10.

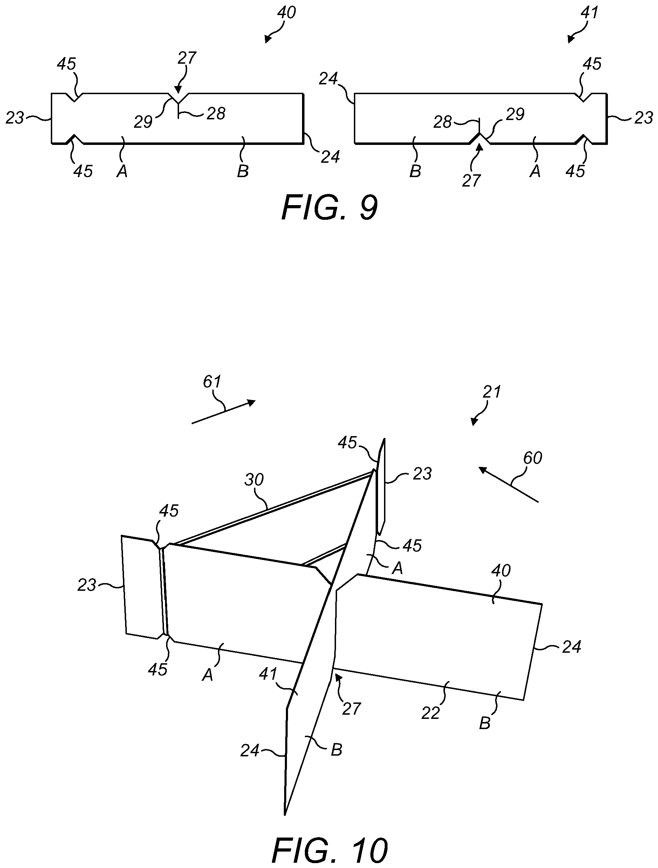

Figure 9 illustrates a first element 40 and a second element 41 used to construct the extendable member 22 for a fourth embodiment of a pusher 21, the assembled pusher 21 being shown in Figure 10. The first and second elements 40 are preferably identical and are in the form of an elongate, generally rectangular, strip having first and second ends 23,24. A pivot formation point 27 is positioned substantially at the midpoint along the length of the element 40,41. A pair of corresponding notches 45 is provided on opposing edges of the element 40,41 towards the first end 23.

The elements 40,41 are thus divided into two sections: sections A extending between the first end 23 and the pivot formation point 27; and sections B extending between pivot formation point 27 and the second end 24.

To assemble the pusher 21, the first and second elements 40,41 are pivotally connected by interlocking their pivot formation points 27. This forms an X-shaped extendable member 22 in which sections A converge from first ends 23 to the pivot formation point 27 and sections B diverge from the pivot formation points 27 towards the second ends 24, to form a pair of pushing members. A resilient member 30 is arranged to connect the spaced apart first ends 23 of the first and second elements 40,41 by locating the resilient member 30 in the pairs of notches 45. Preferably, the resilient member 30 is in the form of a loop which encircles the pairs of notches 45 on the spaced apart portions. The arrangement of the resilient member 30 is such that it respectively urges the first and second ends 23,24 of the first and second elements 40,41 towards each other via a scissor movement about the pivot point, causing the X to contract in one direction and to elongate in the perpendicular direction.

In use, the assembled pusher 21 is inserted into a carton 10 adjacent the rear wall 14 behind the goods (not shown). The pusher 21 is arranged in the carton 10 such that the first ends 23 of the first and second elements 40,41 abut the rear wall 14 and the second ends 24 of the first and second elements 40,41 abut the goods. The pusher 21 is compressed by the goods in a first direction 60 against the bias of the resilient member 30, causing the X to flatten in that direction 60. As goods are removed from the carton 10, the force exerted on the pusher 21 by the goods reduces, and thus the resilient member 30 is able to compress the X in a second direction 61 perpendicular to the first direction 60. This has the effect of causing the pusher 21 to extend in the first direction 60 and thereby push the goods forward within the carton 10.

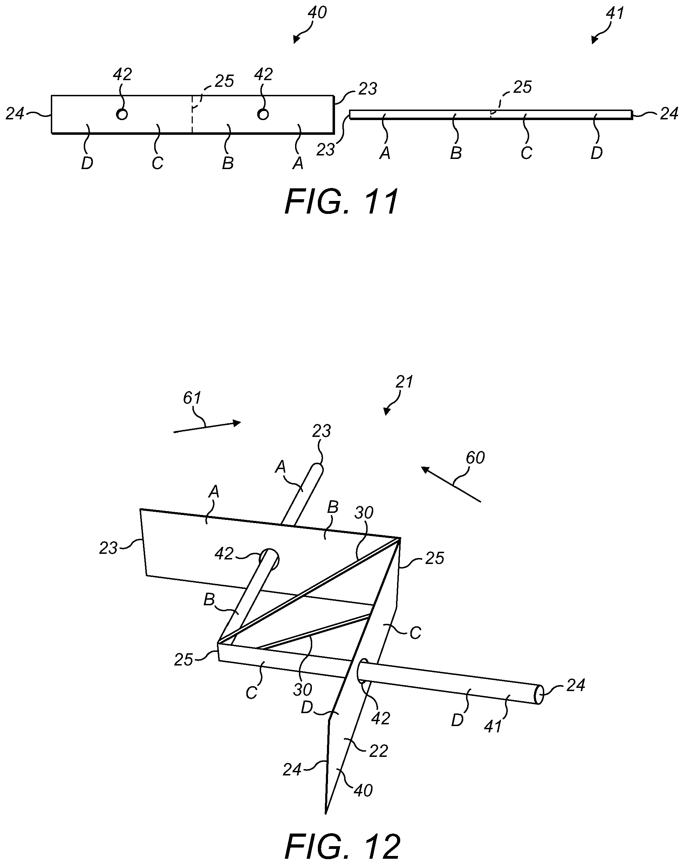

Figure 11 illustrates a first element 40 and a second element 41 used to construct the extendable member 22 for a fifth embodiment of a pusher 21, the assembled pusher 21 being shown in Figure 12. The first element 40 is in the form of an elongate, generally rectangular, strip having first and second ends 23,24. A generally transverse fold line 25 is positioned substantially at the midpoint along the length of the element. Apertures 42 are positioned substantially midway between the central fold line 25 and each of the first and second ends 23,24. The apertures 42 are positioned substantially centrally with respect to the width of the first element 40. Alternatively, the apertures 42 could be replaced by deep notches (not shown).

The first element 40 is thus divided into a plurality sections: section A extending between the first end 23 and the midpoint between the first end 23 and the central fold line 25; section B extending between the midpoint between the first end 23 and the central fold line 25 and the central fold line 25; section C extending between the central fold line 25 and the midpoint between the central fold line 25 and the second end 24; and section D extending between the midpoint between the central fold line 25 and the second end 24 and the second end 24.

The second element 41 is in the form of an elongate tube having first and second ends 23,24. A generally transverse fold line 25 is positioned substantially at the midpoint along the length of the second element 41. Any suitable tubular form may be used, for example the tube may be hollow or solid and may have any suitable cross-section such as a circular or square cross-section. The second element 41 is dimensioned to fit within the apertures 42 on the first element 40.

The second element 41 is thus divided into a plurality of sections: section A extending between the first end 23 and the aperture 42; section B extending between the aperture 42 and the central fold line 25; section C extending between the central fold line 25 and the aperture 42; and section D extending between the aperture 42 and the second end 24.

To assemble the pusher 21, the ends 23,24 of the first and second elements 40,41 are folded inwardly towards each other at their central fold lines 25. Each of the first and second ends 23,24 of the second element 41 is passed through an aperture 42 of the first element 40 such that first and second ends 23,24 of the first and second elements 40,41 are aligned respectively and pivotal connections are formed at the apertures 42. This forms the extendable member 22 in which: sections A converge from the first and second ends 23,24 to the pivotal connection point between the aperture 42 and second element 41; sections B diverge outwards from this point to each central fold line 25; and sections C converge from the central fold lines 25 and are pivotally connected at the second pivotal connection point between the aperture 42 and second element 41. Sections B and C therefore define a quadrilateral section. Sections D diverge from the second pivotal connection point between the aperture 42 and second element 41 to form a pair of pushing members. A resilient member 30 is arranged so that it biases the spaced apart vertices defined by the central fold lines 25 of the first and second elements 40,41 towards each other. A pair of corresponding notches 45 (not shown) may be provided on opposing edges of one or both of the elements 40,41 at the central fold lines 25, in order to aid the location of the resilient member 30. The arrangement of the resilient member 30 is such that it urges the vertices defined by the central fold lines 25 of the first and second elements 40,41 towards each other, causing the quadrilateral section to contract in one direction and to elongate in the perpendicular direction. This causes a scissor movement about the pivot points so that the first ends 23 and the second ends 24 are also urged respectively towards each other.

In use, the assembled pusher 21 is inserted into a carton 10 adjacent the rear wall 14 behind the goods (not shown). The pusher 21 is arranged in the carton 10 such that the first ends 23 of the first and second elements 40,41 abut the rear wall 14 and the second ends 24 of the first and second elements 40,41 abut the goods. The pusher 21 is compressed by the goods in a first direction 60 against the force of the resilient member 30, causing the quadrilateral section to flatten in that direction 60. As goods are removed from the carton 10, the force exerted on the pusher 21 by the goods reduces, and thus the resilient member 30 is able to compress quadrilateral section in a second direction 61 perpendicular to the first direction 60. This has the effect of causing the pusher 21 to extend in the first direction 60 and thereby push the goods forward within the carton 10.

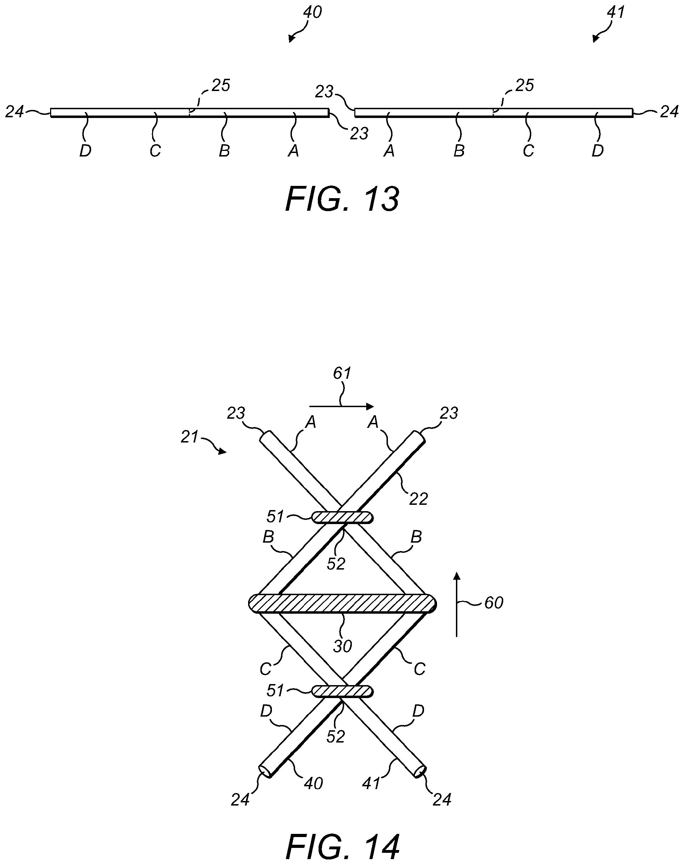

Figure 13 illustrates a first element 40 and a second element 41 used to construct the extendable member 22 for a sixth embodiment of a pusher 21, the assembled pusher 21 being shown in Figure 14. The first and second elements 40 are preferably identical and are in the form of an elongate tube having first and second ends 23,24. A generally transverse fold line 25 is positioned substantially at the midpoint along the length of the elements 40,41. Again, any suitable tubular form may be used, for example the tube may be hollow or solid and may have any suitable cross-section such as a circular or square cross-section.

The elements 40,41 are thus divided into a plurality sections: section A extending between the first end 23 and the midpoint between the first end 23 and the central fold line 25; section B extending between the midpoint between the first end 23 and the central fold line 25 and the central fold line 25; section C extending between the central fold line 25 and the midpoint between the central fold line 25 and the second end 24; and section D extending between the midpoint between the central fold line 25 and the second end 24 and the second end 24.

To assemble the pusher 21, the ends 23,24 of the first and second elements 40,41 are folded inwardly at their central fold lines 25 to form a V-shape. The first and second elements 40,41 are arranged such that the first and second ends 23,24 of one element 40,41 are aligned with each other and with the central fold line 25 of the other element 41,40 and vice versa. Tethering members 51 are used to secure the first and second elements 40,41 to each other at the crossover points 52. This forms the extendable member 22 in which sections A converge from the first and second ends 23,24 to the pivotal connection point formed by the first tethering member 51. Sections B diverge outwards from this point to each central fold line 25 and sections C converge from the central fold lines 25 and are pivotally connected at the second tethering member 51. Sections B and C therefore define a quadrilateral section. Sections D diverge from the second tethering member 51 to form a pair of pushing members. A resilient member 30 is arranged about the spaced apart vertices defined by the central fold lines 25 of the first and second elements 40,41. A pair of corresponding notches 45 (not shown) may be provided on opposing edges of one or both of the elements 40,41 at the central fold lines 25, in order to aid the location of the resilient member 30. The arrangement of the resilient member 30 is such that it urges the vertices defined by the central fold lines 25 of the first and second elements 40,41 towards each other, causing the quadrilateral section to contract in one direction and to elongate in the perpendicular direction. This causes a scissor movement about the pivot points so that the first ends 23 and the second ends 24 are also urged respectively towards each other.

In use, the assembled pusher 21 is inserted into a carton 10 adjacent the rear wall 14 behind the goods (not shown). The pusher 21 is arranged in the carton 10 such that the first ends 23 of the first and second elements 40,41 abut the rear wall 14 and the second ends 24 of the first and second elements 40,41 abut the goods. The pusher 21 is compressed by the goods in a first direction 60 against the bias of the resilient member 30, causing the quadrilateral section to flatten in that direction 60. As goods are removed from the carton 10, the force exerted on the pusher 21 by the goods reduces, and thus the resilient member 30 is able to compress the quadrilateral section in a second direction 61 perpendicular to the first direction 60. This has the effect of causing the pusher 21 to extend in the first direction 60 and thereby push the goods forward within the carton 10.

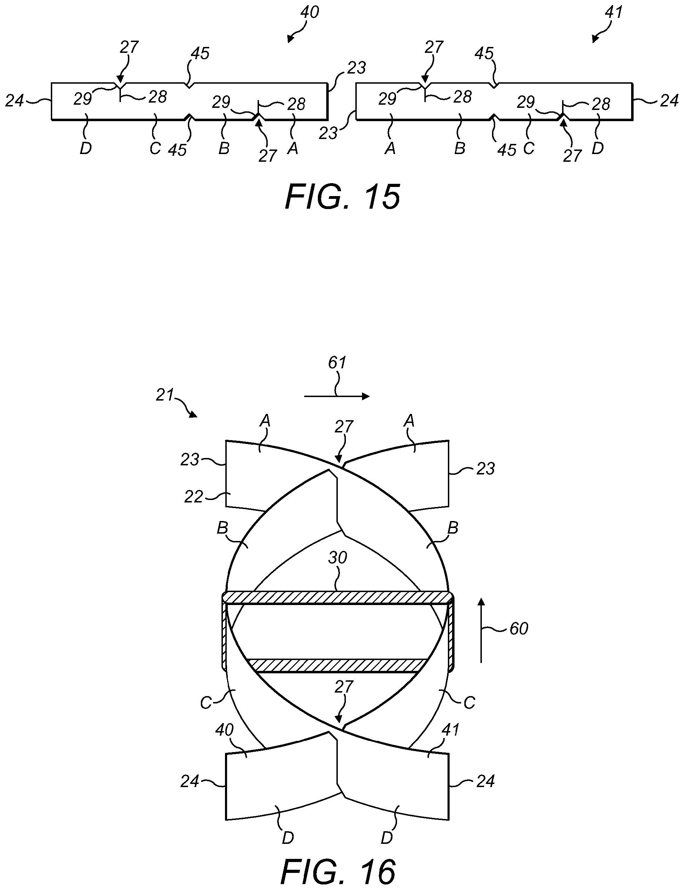

Figure 15 illustrates a first element 40 and a second element 41 used to construct the extendable member 22 for a seventh embodiment of a pusher 21, the assembled pusher 21 being shown in Figure 16. The first and second elements 40 are preferably identical and are in the form of an elongate, generally rectangular, strip having first and second ends 23,24. Two pivot formation points 27 are positioned at substantially 1/4 and 3/4 of the distance from the first end 23 to the second end 24. Preferably, the two pivot formation points 27 are slit in opposing directions from each other, in order to form a more secure pusher 21 when assembled. A pair of corresponding notches 45 is provided on opposing edges of the element 40,41 substantially at the midpoint along the length of the element 40,41.

The element 40,41 is thus divided into a plurality sections: section A extending between the first end 23 and the first pivot formation point 27; section B extending between first pivot formation point 27 and the pair of notches 45; section C extending between the pair of notches 45 and the second pivot formation point 27; and section D extending between the second pivot formation point 27 and the second end 24.

To assemble the pusher 21, the first and second elements 40,41 are curved so that their respective pivot formation points 27 can be interlocked. This forms the extendable member 22 in which: sections A converge from the first and second ends 23,24 to the first pivot formation point 27; sections B diverge outwards from this point to the notches 45; and sections C converge from the notches 45 and are pivotally connected at the second pivot formation point 27. Sections B and C therefore together define two arcuate portions between the pivot formation points 27, forming an eye-shaped section. Sections D diverge from the second pivot formation point 27 to form a pair of pushing members. A resilient member 30 is arranged around the spaced apart longitudinal midpoints of each of the first and second elements 40,41. The notches 45 aid the positioning of the resilient member 30. The arrangement of the resilient member 30 is such that it urges the spaced apart midpoints of the first and second elements 40,41 towards each other, causing the eye-shaped section defined by the arcs to contract in one direction and to elongate in the perpendicular direction. This causes a scissor movement about the pivot points so that the first ends 23 and the second ends 24 are also urged respectively towards each other.

In use, the assembled pusher 21 is inserted into a carton 10 adjacent the rear wall 14 behind the goods (not shown). The pusher 21 is arranged in the carton 10 such that the first ends 23 of the first and second elements 40,41 abut the rear wall 14 and the second ends 24 of the first and second elements 40,41 abut the goods, in the direction of the front wall 15. The pusher 21 is compressed by the goods in a first direction 60 against the force of the resilient member 30, causing the eye-shaped section to flatten in that direction 60. As goods are removed from the carton 10, the force exerted on the pusher 21 by the goods reduces, and thus the resilient member 30 is able to compress the eye-shaped section in a second direction 61 perpendicular to the first direction 60. This has the effect of causing the pusher 21 to extend in the first direction 60 and thereby push the goods forward within the carton 10.

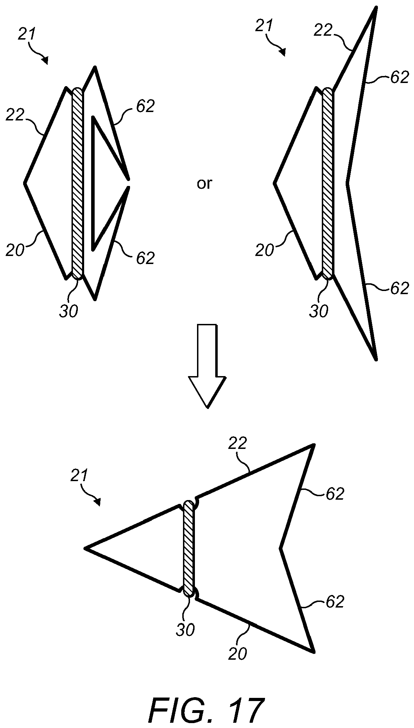

Figure 17 illustrates an eighth embodiment of a pusher 21. The pusher 21 is formed from an extendable member 22 and a resilient member 30. The extendable member 22 comprises an element 20 which is in the form of an elongate, generally rectangular strip. The element 20 is folded into a loop having legs 62. The resilient member 30 is arranged around the extendable member 22 so as to cause the legs 62 to extend, thereby elongating the extendable member 22.

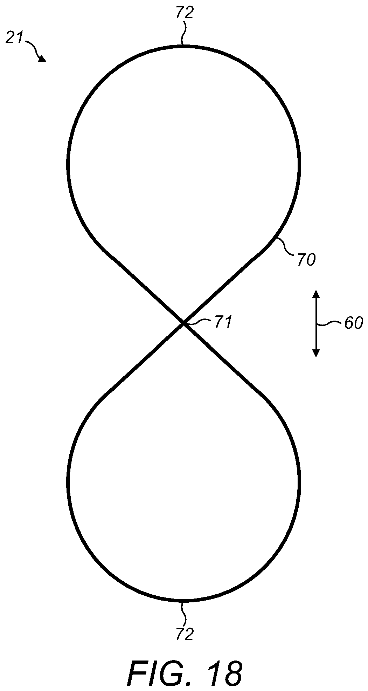

Figure 18 illustrates a ninth embodiment of a pusher 21. The pusher 21 is formed from a resilient ring 70 which is twisted to form a figure of eight, thereby introducing some biasing into the ring structure. The crossover point 71 at the centre of the figure of eight, resulting from twisting the resilient member 70, may be secured by a tethering member (not shown). The figure of eight has a pushing surface 72 at each end.

In use, the twisted pusher 21 is inserted into a carton 10 adjacent the rear wall 14 behind the goods (not shown). The pusher 21 is arranged in the carton 10 such that one pushing surface 72 abuts the rear wall and the other pushing surface 72 abuts the goods, in the direction of the front wall 15. The pusher 21 is compressed by the goods in a first direction 60 against the force of the bias introduced by the twist in the resilient ring 70. As goods are removed from the carton 10, the force exerted on the pusher 21 by the goods reduces, and thus the bias in the resilient ring 70 causes it to extend in the first direction 60 and thereby push the goods forward within the carton 10.

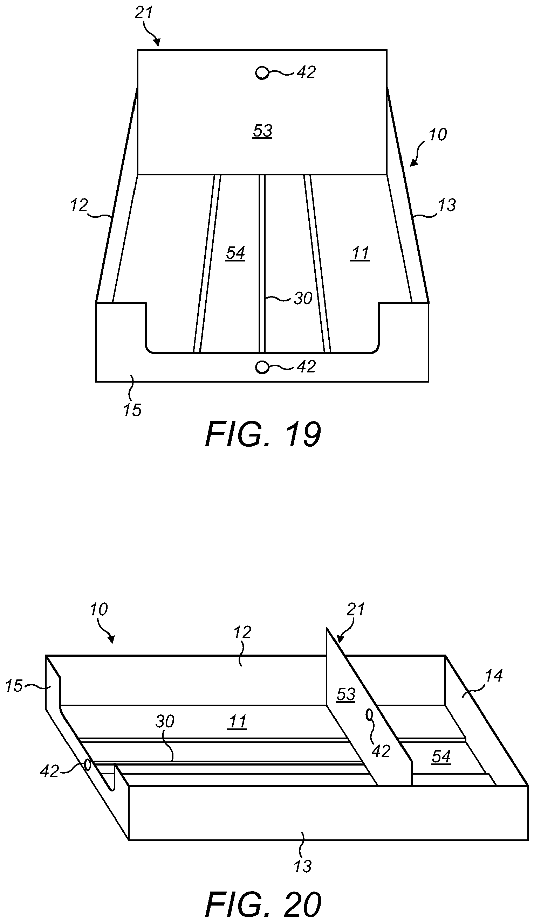

Figures 19 and 20 illustrate a tenth embodiment of a pusher 21 assembled in a carton 10. The pusher 21 is in the form of a first, rigid, member 53 which sits in the carton 10 behind the goods to be dispensed (not shown). The rigid member 53 may be a plate-like member (i.e. it does not have a substantial thickness), or another shape with a flat front surface forming a vertical abutment surface. Alternatively it may have a non-flat front surface. If the rigid member 53 is plate-like then it may have a horizontal stabilising element at its base (not shown). The rigid member 53 is connected to the front wall 15 of the carton 10 by a second, resilient, member 30 such that the resilient member 30 urges the rigid member 53 towards the front wall 15 of the carton 10. The resilient member 30 may be secured to the rigid member 53 and the front wall 15 via apertures 42. For example, the resilient member 30 may be an elastic band which is secured to the rigid member 53 and the front wall 15 by tying it through the apertures 42. Alternative means of securing the resilient member 30 would be obvious to the skilled person. A channel 54 may be provided in the base 11 to receive the resilient member 30 and ensure that the base 11 provides a substantially flat surface for the goods (not shown).

In use, the rigid member 53 is pushed to the back of the carton 10 and goods are packed into the carton 10 between the rigid member 53 and the front wall 15 (not shown). As goods are removed from the carton 10, the resilient member 30 pulls the rigid member 53 forwards, which causes the rigid member 53 to push the remaining goods towards the front of the carton 10.

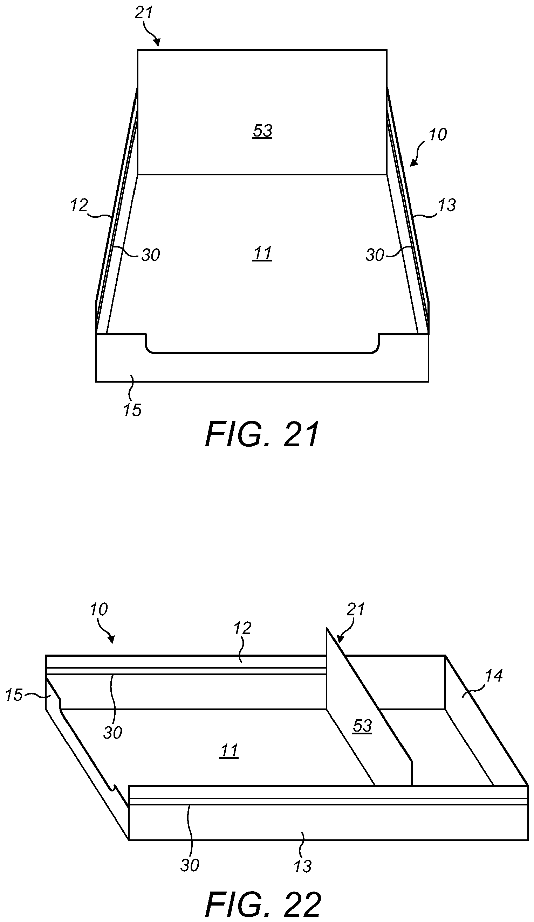

Figures 21 and 22 illustrate an eleventh embodiment of a pusher 21 assembled in a carton 10. Again, the pusher 21 is in the form of a first, rigid, member 53 which sits in the carton 10 behind the goods to be dispensed (not shown). The rigid member 53 is similar to, and may have the same variations as, the rigid member 53 of the tenth embodiment. A second, resilient, member 30, in the form of a ring or loop, is placed around the side walls 12,13 and rear wall 14 of the carton 10. The front wall 15 of the carton 10 is shorter than the side walls 12,13 and rear wall 14 such that the resilient member 30 may be placed around the side walls 12,13 and rear wall 14 of the carton 10 without contacting the front wall 15. The rigid member 53 is placed between the resilient member 30 and the front wall 15, such that the resilient member 30 is biased to urge the rigid member 53 towards the front wall 14 of the carton 10. The resilient member 30 may be secured to the rigid member 53 by, for example, an adhesive strip. Alternative means of securing the resilient member 30 would be obvious to the skilled person.

In use, the rigid member 53 is pushed to the back of the carton 10 and goods are packed into the carton 10 between the rigid member 53 and the front wall 15 (not shown). As goods are removed from the carton 10, the resilient member 30 pulls the rigid member 53 forwards, which causes the rigid member 53 to push the remaining goods towards the front of the carton 10.

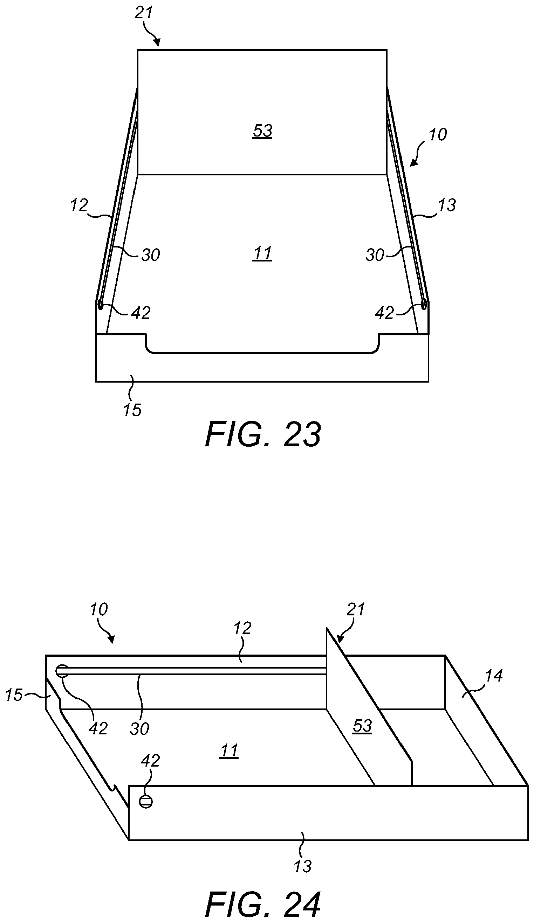

Figures 23 and 24 illustrate an eleventh embodiment of a pusher 21 assembled in a carton 10. Again, the pusher 21 is in the form of a first, rigid, member 53 which sits in the carton 10 behind the goods to be dispensed (not shown). The rigid member 53 is similar to, and may have the same variations as, the rigid member 53 of the tenth embodiment. A second, resilient, member 30 is secured between the side walls 12,13, towards the front wall 15. The resilient member 30 may be secured to the side walls 12,13 via apertures 42. The rigid member 53 is placed between the resilient member 30 and the front wall 15 such that the resilient member 30 is biased to urge the rigid member 53 towards the front wall 14 of the carton 10. The resilient member 30 may be secured to the rigid member 53 by, for example, an adhesive strip. Alternative means of securing the resilient member 30 would be obvious to the skilled person.

In use, the rigid member 53 is pushed to the back of the carton 10 and goods are packed into the carton 10 between the rigid member 53 and the front wall 14 (not shown). As goods are removed from the carton 10, the resilient member 30 pulls the rigid member 53 forwards, which causes the rigid member 53 to push the remaining goods towards the front of the carton 10.

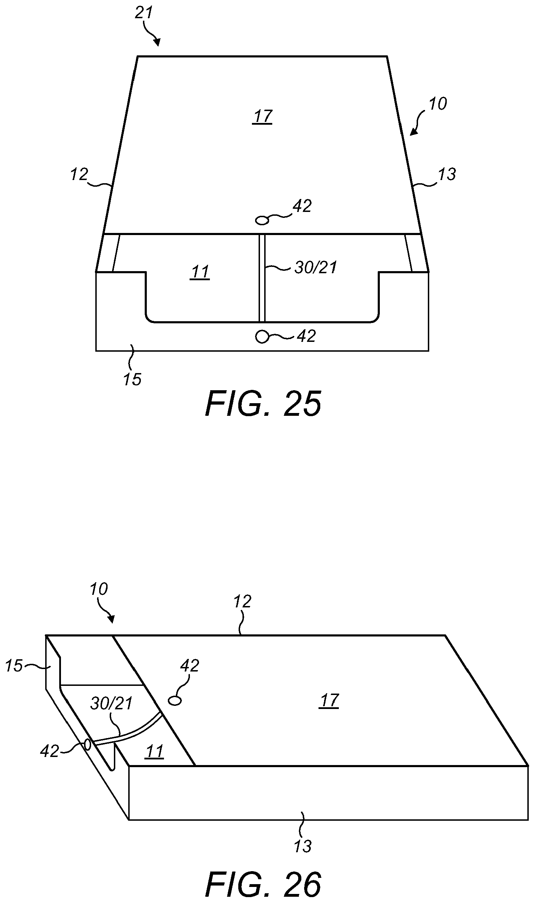

Figures 25 and 26 illustrate an eleventh embodiment of a pusher 21 assembled in a carton 10. In this embodiment, the carton 10 has a lid 17 which extends from the rear wall 14 towards the front wall 15, with a gap between the lid 17 and the front wall 15. The pusher comprises a resilient member 30, which is secured between the lid 17 and the front wall 14. The resilient member 30 may be in the form of a single wider resilient member 30 or two or more spaced apart narrower resilient members 30 (not shown). The resilient member 30 may be secured to the lid 17 and the front wall 14 via apertures 42. Alternative means of securing the resilient member 30 would be obvious to the skilled person. A channel (not shown) may be provided in the base 11 to receive the resilient member 30 and ensure that the base 11 provides a substantially flat surface for the goods (not shown).

In use, goods are packed into the carton 10 between the resilient member 30 and the front wall 14 (not shown). As goods are removed from the carton 10, the resilient member 30 pulls the remaining goods towards the front of the carton 10.

As will be perceived by the skilled person, the dimensions of the elements 20,40,41 and resulting pushers 21 will depend on the dimensions of the carton 10 into which the pusher 21 is to be fitted. Additionally, the ratios of the various sections A,B,C,D,E,F,G of the elements 20,40,41 of the different pusher 21 embodiments may be altered by the skilled person. Similarly, the specific pattern and positioning of fold lines 25,26 of the embodiments of the pusher 21 formed from the foldable elements 20,40,41 may be varied. The dimensions of the carton 10 may also determine which pusher 21 embodiment is most suited to the carton.

## Claims

1. A pusher (21) for use in packaging for displaying items, comprising:
an extendable member (22) having a plurality of sections which are pivotally connected to each other at at least one pivot point (27) and are configured to provide at least a pair of spaced apart portions; and
at least one resilient member (30) positioned about the spaced apart portions to bias them towards each other in a first direction; wherein
the biasing of the spaced apart portions towards each other results in an extension of the extendable member (22) in a second direction which is perpendicular to the first direction,
**characterised in that** the extendable member (22) is formed from a single elongate element (20).

2. A pusher (21) according to claim 1, wherein the sections of the extendable member (22) define a quadrilateral section.

3. A pusher (21) according to claim 1 or claim 2, wherein the element (20) is provided with at least one fold line.

4. A pusher (21) according to any one of the preceding claims, wherein the element (20) comprises a generally rectangular strip.

5. A pusher (21) according to claim 4, wherein the strip comprises at least one pivot formation point (27).

6. A pusher (21) according to claim 5, wherein the at least one pivot formation point (27) comprises a slit (28) extending across at least half of the width of the strip.

7. A pusher (21) according to claim 6, wherein a notch (29) is provided where the slit (28) meets the edge of the strip.

8. A pusher (21) according to claim 6 or claim 7, wherein the slit (28) comprises a slot having a width and a base.

9. A pusher (21) according to any one of the preceding claims, wherein the resilient member (30) comprises an elastic band.

10. A pusher (21) according to any one of the preceding claims, wherein the extendable member (22) is formed from cardboard.

11. A pusher system (21), comprising a carton (10) and a pusher (21) according to any one of the preceding claims.

12. A shelf ready pack for displaying items for sale, comprising:
a carton (10) having a base (11), a rear wall (14), a front wall (15), and two side walls (12, 13); and
a pusher (21) according to any one of the preceding claims ; wherein
the pusher (21) is arranged so that it abuts the rear wall (14) of the carton (10) and extends towards the front wall of the carton (10).

13. A shelf ready pack according to claim 12, wherein the shelf ready pack comprises a plurality of stacked items arranged between the pusher (21) and the front wall of the carton (10).

14. A shelf ready pack according to claim 13, wherein the items are vertically stacked.

15. A shelf ready pack according to claim 13, wherein the items are horizontally stacked.

16. A shelf ready pack for displaying items for sale, comprising:
a carton (10) having a base (11), a rear wall (14), a front wall (15), and two side walls (12, 13);
a rigid member (53) arranged to sit in the carton (10); and
a resilient member (30); wherein
a channel (54) is provided in the base (11) of the carton (10) for housing the resilient member (30); **characterised in that**
the rigid member (53) is connected to the front wall (15) by the resilient member (30) such that the resilient member (30) is biased to urge the rigid member (53) towards the front wall (15) of the carton (10).

17. A shelf ready pack for displaying items for sale, comprising:
a carton (10) having a base (11), a rear wall (14), a front wall (15), and two side walls (12, 13);
a rigid member (53) arranged to sit in the carton (10); and
a resilient member (30); wherein
the rigid member (53) and the resilient member (30) are arranged such that the resilient member (30) is biased to urge the rigid member (53) towards the front wall of the carton (10),
**characterised in that** the front wall (15) is shorter than the side walls (12, 13)and rear wall (14);
the resilient member (30) comprises a ring which is located around the side walls (12, 13) and rear wall (14); and
the rigid member (53) is placed between the resilient member (30) and the front wall (15).

18. A shelf ready pack according to claim 16 or claim 17, wherein the resilient member (30) is biased to pull the rigid member (53) towards the front wall (15) of the carton (10).

19. A shelf ready pack according to any one of claims 16 to 18, wherein the rigid member (53) has a vertical configuration.

20. A shelf ready pack according to any one of claims 16 to 19, wherein the rigid member (53) comprises a stabilising element.

21. A shelf ready pack according to any one of claims 16 or 18 to 20, where not dependent on claim 17, wherein an aperture (42) is provided in each of the rigid member (53) and the front wall (15) for connection of the resilient member (30).

22. A shelf ready pack according to any one of claims 16 to 21, wherein the rigid member (53) comprises cardboard.

23. A shelf ready pack according to any one of claims 16 to 22, wherein the resilient member (30) comprises an elastic band.

24. A shelf ready pack according to any one of claims 16 to 23, wherein the shelf ready pack comprises a plurality of stacked items arranged between the rigid member (53) and the front wall (15) of the carton (10).

25. A shelf ready pack according to claim 24, wherein the items are vertically stacked.

26. A shelf ready pack according to claim 24, wherein the items are horizontally stacked.

## Patentansprüche

1. Schieber (21) zur Verwendung bei Verpackungen zum Ausstellen von Artikeln, umfassend:
ein erweiterbares Element (22), das eine Vielzahl von Abschnitten aufweist, die schwenkbar an mindestens einem Schwenkpunkt (27) miteinander verbunden sind und konfiguriert sind, um mindestens ein Paar in einem Abstand zueinander angeordneter Abschnitte bereitzustellen; und
mindestens ein elastisches Element (30), das um die in einem Abstand zueinander angeordneten Abschnitte herum positioniert ist, um diese in einer ersten Richtung zueinander vorzuspannen; wobei
das Vorspannen der in einem Abstand zueinander angeordneten Abschnitte zu einer Erweiterung des erweiterbaren Elements (22) in einer zweiten Richtung führt, die senkrecht zu der ersten Richtung liegt,
**dadurch gekennzeichnet, dass** das erweiterbare Element (22) aus einem einzelnen länglichen Element (20) gebildet ist.

2. Schieber (21) nach Anspruch 1, wobei die Abschnitte des erweiterbaren Elements (22) einen viereckigen Abschnitt definieren.

3. Schieber (21) nach Anspruch 1 oder Anspruch 2, wobei das Element (20) mit mindestens einer Falzlinie bereitgestellt wird.

4. Schieber (21) nach einem der vorstehenden Ansprüche, wobei das Element (20) einen im Allgemeinen rechteckigen Streifen umfasst.

5. Schieber (21) nach Anspruch 4, wobei der Streifen mindestens einen Schwenkbildungspunkt (27) umfasst.

6. Schieber (21) nach Anspruch 5, wobei der mindestens eine Schwenkbildungspunkt (27) einen Schlitz (28) umfasst, der sich entlang mindestens der Hälfte der Breite des Streifens erstreckt.

7. Schieber (21) nach Anspruch 6, wobei eine Kerbe (29) bereitgestellt wird, an der der Schlitz (28) auf den Rand des Streifens trifft.

8. Schieber (21) nach Anspruch 6 oder Anspruch 7, wobei der Schlitz (28) einen Einschnitt umfasst, der eine Breite und eine Basis aufweist.

9. Schieber (21) nach einem der vorstehenden Ansprüche, wobei das elastische Element (30) ein Gummiband umfasst.

10. Schieber (21) nach einem der vorstehenden Ansprüche, wobei das erweiterbare Element (22) aus Pappe gebildet ist.

11. Schiebersystem (21), umfassend einen Karton (10) und einen Schieber (21) nach einem der vorstehenden Ansprüche.

12. Verkaufsfertige Verpackung zum Ausstellen von Artikeln zum Verkauf, umfassend:
einen Karton (10), der einen Boden (11), eine Rückwand (14), eine Vorderwand (15), und zwei Seitenwände (12, 13) aufweist; und
einen Schieber (21) nach einem der vorstehenden Ansprüche; wobei
der Schieber (21) so angeordnet ist, dass er an die Rückwand (14) des Kartons (10) anstößt und sich zu der Vorderseite des Kartons (10) erstreckt.

13. Verkaufsfertige Verpackung nach Anspruch 12, wobei die verkaufsfertige Verpackung Folgendes umfasst
eine Vielzahl gestapelter Artikel, die zwischen dem Schieber (21) und der Vorderseite des Kartons (10) angeordnet sind.

14. Verkaufsfertige Verpackung nach Anspruch 13, wobei die Artikel vertikal gestapelt sind.

15. Verkaufsfertige Verpackung nach Anspruch 13, wobei die Artikel horizontal gestapelt sind.

16. Verkaufsfertige Verpackung zum Ausstellen von Artikeln zum Verkauf, umfassend:
einen Karton (10), der einen Boden (11), eine Rückwand (14), eine Vorderwand (15), und zwei Seitenwände (12, 13) aufweist;
ein starres Element (53), das so angeordnet ist, dass es in dem Karton (10) sitzt; und
ein elastisches Element (30); wobei
ein Kanal (54) in dem Boden (11) des Kartons (10) zum Unterbringen des elastischen Elements (30) bereitgestellt wird, **dadurch gekennzeichnet, dass**
das starre Element (53) mit der Vorderwand (15) durch das elastische Element (30) verbunden ist, so dass das elastische Element (30) vorgespannt ist, um das starre Element (53) zu der Vorderwand (15) des Kartons (10) zu drängen.

17. Verkaufsfertige Verpackung zum Ausstellen von Artikeln zum Verkauf, umfassend:
einen Karton (10), der einen Boden (11), eine Rückwand (14), eine Vorderwand (15), und zwei Seitenwände (12, 13) aufweist;
ein starres Element (53), das so angeordnet ist, dass es in dem Karton (10) sitzt; und
ein elastisches Element (30); wobei
das starre Element (53) und das elastische Element (30) so angeordnet sind, dass das elastische Element (30) vorgespannt ist, um das starre Element (53) zu der Vorderwand des Kartons (10) zu drängen,
**dadurch gekennzeichnet, dass** die Vorderwand (15) kürzer als die Seitenwände (12,13) und die Rückwand (14) ist;
das elastische Element (30) einen Ring umfasst, der sich um die Seitenwände (12, 13) und die Rückwand (14) herum befindet; und
das starre Element (53) zwischen dem elastischen Element (30) und der Vorderwand (15) platziert ist.

18. Verkaufsfertige Verpackung nach Anspruch 16 oder Anspruch 17, wobei das elastische Element (30) vorgespannt ist, um das starre Element (53) zu der Vorderwand (15) des Kartons (10) zu ziehen.

19. Verkaufsfertige Verpackung nach einem der Ansprüche 16 bis 18, wobei das starre Element (53) eine vertikale Konfiguration aufweist.

20. Verkaufsfertige Verpackung nach einem der Ansprüche 16 bis 19, wobei das starre Element (53) ein stabilisierendes Element umfasst.

21. Verkaufsfertige Verpackung nach einem der Ansprüche 16 oder 18 bis 20, jedoch nicht abhängig von Anspruch 17, wobei eine Öffnung (42) sowohl in dem starren Element (53) als auch in der Vorderwand (15) zur Verbindung des elastischen Elements (30) bereitgestellt ist.

22. Verkaufsfertige Verpackung nach einem der Ansprüche 16 bis 21, wobei das starre Element (53) Pappe umfasst.

23. Verkaufsfertige Verpackung nach einem der Ansprüche 16 bis 22, wobei das elastische Element (30) ein Gummiband umfasst.

24. Verkaufsfertige Verpackung nach einem der Ansprüche 16 bis 23, wobei die verkaufsfertige Verpackung eine Vielzahl gestapelter Artikel umfasst, die zwischen dem starren Element (53) und der Vorderwand (15) des Kartons (10) angeordnet sind.

25. Verkaufsfertige Verpackung nach Anspruch 24, wobei die Artikel vertikal gestapelt sind.

26. Verkaufsfertige Verpackung nach Anspruch 24, wobei die Artikel horizontal gestapelt sind.

## Revendications

1. Poussoir (21) pour une utilisation dans un emballage pour présenter des articles, comprenant :
un élément extensible (22) ayant une pluralité de sections qui sont reliées en relation pivotante les unes avec les autres au niveau d'au moins un point de pivot (27) et sont configurées pour fournir au moins une paire de parties mutuellement espacées ; et
au moins un élément élastique (30) positionné autour des parties mutuellement espacées pour les solliciter les unes vers les autres dans une première direction ; dans lequel
la sollicitation des parties mutuellement espacées les unes vers les autres entraîne une extension de l'élément extensible (22) dans une deuxième direction qui est perpendiculaire à la première direction,
**caractérisé en ce que** l'élément extensible (22) est formé à partir d'un élément allongé unique (20).

2. Poussoir (21) selon la revendication 1, dans lequel les sections de l'élément extensible (22) définissent une section quadrilatérale.

3. Poussoir (21) selon la revendication 1 ou la revendication 2, dans lequel l'élément (20) est pourvu d'au moins une ligne de pliage.

4. Poussoir (21) selon l'une quelconque des revendications précédentes, dans lequel l'élément (20) comprend une bande généralement rectangulaire.

5. Poussoir (21) selon la revendication 4, dans lequel la bande comprend au moins un point de formation de pivot (27).

6. Poussoir (21) selon la revendication 5, dans lequel ledit au moins un point de formation de pivot (27) comprend une fente (28) s'étendant à travers au moins la moitié de la largeur de la bande.

7. Poussoir (21) selon la revendication 6, dans lequel une encoche (29) est fournie à l'endroit où la fente (28) rencontre le bord de la bande.

8. Poussoir (21) selon la revendication 6 ou la revendication 7, dans lequel la fente (28) comprend une encoche ayant une largeur et une base.

9. Poussoir (21) selon l'une quelconque des revendications précédentes, dans lequel l'élément élastique (30) comprend une bande élastique.

10. Poussoir (21) selon l'une quelconque des revendications précédentes, dans lequel l'élément extensible (22) est formé à partir de carton.

11. Système de poussoir (21), comprenant une boîte (10) et un poussoir (21) selon l'une quelconque des revendications précédentes.

12. Emballage prêt à la mise en rayon pour présenter des articles à vendre, comprenant :
une boîte (10) ayant une base (11), une paroi arrière (14), une paroi avant (15) et deux parois latérales (12, 13) ; et
un poussoir (21) selon l'une quelconque des revendications précédentes ; dans lequel
le poussoir (21) est disposé de sorte qu'il vient en butée contre la paroi arrière (14) de la boîte (10) et s'étend en direction de la paroi avant de la boîte (10).

13. Emballage prêt à la mise en rayon selon la revendication 12, où l'emballage prêt à la mise en rayon comprend
une pluralité d'articles empilés disposés entre le poussoir (21) et la paroi avant de la boîte (10).

14. Emballage prêt à la mise en rayon selon la revendication 13, dans lequel les articles sont empilés verticalement.

15. Emballage prêt à la mise en rayon selon la revendication 13, dans lequel les articles sont empilés horizontalement.

16. Emballage prêt à la mise en rayon pour présenter des articles à vendre, comprenant :
une boîte (10) ayant une base (11), une paroi arrière (14), une paroi avant (15) et deux parois latérales (12, 13) ;
un élément rigide (53) disposé pour reposer dans la boîte (10) ; et
un élément élastique (30) ; dans lequel
un canal (54) est fourni dans la base (11) de la boîte (10) pour loger l'élément élastique (30) ; **caractérisé en ce que**
l'élément rigide (53) est relié à la paroi avant (15) par l'élément élastique (30) de telle sorte que l'élément élastique (30) est sollicité pour presser l'élément rigide (53) en direction de la paroi avant (15) de la boîte (10).

17. Emballage prêt à la mise en rayon pour présenter des articles à vendre, comprenant :
une boîte (10) ayant une base (11), une paroi arrière (14), une paroi avant (15) et deux parois latérales (12, 13) ;
un élément rigide (53) disposé pour reposer dans la boîte (10) ; et
un élément élastique (30) ; dans lequel
l'élément rigide (53) et l'élément élastique (30) sont disposés de telle sorte que l'élément élastique (30) est sollicité pour presser l'élément rigide (53) en direction de la paroi avant de la boîte (10),
**caractérisé en ce que** la paroi avant (15) est plus courte que les parois latérales (12, 13) et la paroi arrière (14) ;
l'élément élastique (30) comprend un anneau qui est situé autour des parois latérales (12, 13) et de la paroi arrière (14) ; et
l'élément rigide (53) est placé entre l'élément élastique (30) et la paroi avant (15).

18. Emballage prêt à la mise en rayon selon la revendication 16 ou la revendication 17, dans lequel l'élément élastique (30) est sollicité pour tirer l'élément rigide (53) en direction de la paroi avant (15) de la boîte (10).

19. Emballage prêt à la mise en rayon selon l'une quelconque des revendications 16 à 18, dans lequel l'élément rigide (53) a une configuration verticale.

20. Emballage prêt à la mise en rayon selon l'une quelconque des revendications 16 à 19, dans lequel l'élément rigide (53) comprend un élément de stabilisation.

21. Emballage prêt à la mise en rayon selon l'une quelconque des revendications 16 ou 18 à 20, lorsqu'elle ne dépend pas de la revendication 17, dans lequel une ouverture (42) est fournie dans chacun de l'élément rigide (53) et de la paroi avant (15) pour la liaison de l'élément élastique (30).

22. Emballage prêt à la mise en rayon selon l'une quelconque des revendications 16 à 21, dans lequel l'élément rigide (53) comprend du carton.

23. Emballage prêt à la mise en rayon selon l'une quelconque des revendications 16 à 22, dans lequel l'élément élastique (30) comprend une bande élastique.

24. Emballage prêt à la mise en rayon selon l'une quelconque des revendications 16 à 23, où l'emballage prêt à la mise en rayon comprend une pluralité d'articles empilés disposés entre l'élément rigide (53) et la paroi avant (15) de la boîte (10).

25. Emballage prêt à la mise en rayon selon la revendication 24, dans lequel les articles sont empilés verticalement.

26. Emballage prêt à la mise en rayon selon la revendication 24, dans lequel les articles sont empilés horizontalement.
